# EUROPÄISCHE PATENTSCHRIFT

(11) **EP 2 271 525 B1**
(45) Veröffentlichungstag und Bekanntmachung des Hinweises auf die Patenterteilung: **25.07.2012**
(21) Anmeldenummer: 09738136.2
(22) Anmeldetag: 28.04.2009
(51) Int. Cl.: B60S 1/40, B60S 1/38

(54) **VORRICHTUNG ZUM GELENKIGEN VERBINDEN EINES WISCHBLATTS MIT EINEM WISCHARM**
DEVICE FOR THE ARTICULATED CONNECTION OF A WIPER BLADE TO A WIPER ARM
DISPOSITIF DE LIAISON ARTICULÉE D'UNE RACLETTE D'ESSUIE-GLACE AVEC UN BRAS D' ESSUIE-GLACE

(30) Priorität: 28.04.2008 DE 102008001426
(43) Veröffentlichungstag der Anmeldung: 12.01.2011
(73) Patentinhaber: Robert Bosch GmbH, 70442 Stuttgart (DE)
(72) Erfinder: VIX, Patrick, F-67850 Offendorf (FR)
(86) Internationale Anmeldenummer: PCT/EP2009/055108
(87) Internationale Veröffentlichungsnummer: WO 2009/133092

(56) Entgegenhaltungen:
- DE-A1- 10 340 139
- FR-A1- 2 842 485

## Beschreibung

### Stand der Technik

Die Erfindung geht von einer Vorrichtung zum gelenkigen Verbinden eines Wischblatts mit einem Wischarm nach dem Oberbegriff des Anspruchs 1 aus.

Aus der DE 103 40 139 A1 ist eine gattungsgemäße Vorrichtung bekannt, die ein Anschlusselement in Form einer Blechkralle besitzt. Diese ist mit Krallen an einem Tragelement in Form einer zentralen Federschiene oder zweier parallel verlaufender Federschienen befestigt, während sich auf der dem Tragelement abgewandten Seite ein Mittelsteg in Längsrichtung erstreckt. Die Krallen sind als Klippse ausgebildet und können quer zur Längsrichtung auf das Tragelement aufgedrückt werden. Dabei stützt sich der Boden des Anschlusselements, dessen Profil der angrenzenden Kontur der Wischleiste angepasst ist, an dem Tragelement ab. An einer Stirnseite des Anschlusselements, das als Blechbiegeteil oder in einem Spritzgießverfahren aus Kunststoff hergestellt sein kann, ist ein Lagerelement in Form eines Lagerbetts angeformt, in dem eine passende Lagerwalze eines Verbindungselements gelagert ist.

Das Verbindungselement, das ebenfalls aus Kunststoff im Spritzgießverfahren hergestellt wird, weist einen Hohlraum auf, der zum Ende des Wischarms hin eine Öffnung hat. Das freie Ende des Wischarms ist als Hammerkopf ausgebildet und weist vier Aussparungen in den Randbereichen des Profils auf. Zur Montage wird der Hammerkopf zunächst durch den breiteren Bereich eines Durchbruchs eingefädelt und anschließend über die Öffnung in den Hohlraum eingefügt. In montiertem Zustand greifen seitliche Klippse in die Aussparungen des Hammerkopfs und halten ihn fest.

An dem Verbindungselement ist ferner eine Deckplatte angeformt, die in eine Öffnung einer Abdeckkappe passt. Diese wird auf das Anschlusselement aufgeklippst und schützt in montiertem Zustand zusammen mit der Deckplatte die Gelenkverbindung vor äußeren Einflüssen. An der dem Anschlusselement zugewandten Seite der Deckplatte besitzt das Verbindungselement eine Kulisse. Diese greift in ein Langloch ein, in dem sie an ihren seitlichen, parallel verlaufenden Außenflächen geführt wird. Die Kulisse, die an der der Lagerwalze abgewandten Stirnseite offen ist, besitzt an den Außenseiten ihrer Seitenwände und an ihrer vorderen Stirnwand Klippse, mit denen das Verbindungselement in dem Langloch des Wischarms gehalten wird. Die Montage zwischen dem Anschlusselement und dem Verbindungselement erfolgt unter einem Montagewinkel von ca. 35° bis 45°, wobei durch eine Schwenkbewegung in die Betriebsposition der Mittelsteg des Anschlusselements in die Kulisse des Verbindungselements gleitet. Somit wird verhindert, dass sich die Lagerwalze in der Betriebsstellung aus dem Lagerbett des Anschlusselements bewegen kann. Abschließend wird eine Abdeckkappe auf das Anschlusselement geklippst, sodass dieses und das Verbindungselement gegenüber der Umgebung geschützt sind.

### Offenbarung der Erfindung

Nach der Erfindung besitzt das Verbindungselement zwischen einem oberen Schenkel und einem unteren Schenkel, die durch die Lagerwalze miteinander verbunden sind, einen Aufnahmeraum für das freie Ende des Wischarms. An der Innenseite des unteren Schenkels ist ein Rasthaken angeordnet, der in montiertem Zustand in das Langloch des Wischarms einrastet und an der vorderen Stirnseite des Langlochs anliegt. Der Rasthaken füllt das Langloch ein Stück weit aus, während ein Verriegelungsblock durch ein Langloch des unteren Schenkels des Anschlusselements in das Langloch des Wischarms greift und den Rest des Langlochs des Wischarms ausfüllt.

Die Vorrichtung besteht aus zwei Teilen, nämlich dem mit dem Wischblatt zu verbindenden Anschlusselement und dem mit dem Wischarm zu verbindenden Verbindungselement. Beide Teile werden zweckmäßigerweise in einem Spritzgießverfahren aus Kunststoff hergestellt. Auf Grund der geringen Teilezahl kann die Vorrichtung mit einem geringen Materialaufwand einfach und präzise hergestellt werden. Ferner ist sie leicht zu montieren. Dabei wird das freie Ende des Wischarms, das einen rechteckigen Querschnitt aufweist, in Längsrichtung in den Aufnahmeraum zwischen dem oberen Schenkel und dem unteren Schenkel geschoben, bis der Rasthaken an der Innenseite des unteren Schenkels in das Langloch des Wischarms einrastet, sodass das Verbindungselement an der vorderen Stirnseite des Wischarms und mit dem Rasthaken an der vorderen Stirnseite des Langlochs anliegt und am Wischarm fixiert ist. Nun kann die Lagerwalze des Verbindungselements in das Lagerbett des Anschlusselements unter einem Montagewinkel von ca. 30° bis 45° eingesetzt und danach in die Betriebsstellung gebracht werden, bei der das Wischblatt und der Wischarm annähernd parallel zueinander verlaufen. Bei der Schwenkbewegung gleitet der Verriegelungsblock des Anschlusselements hinter dem Rasthaken in das Langloch des Wischarms und füllt dieses aus, sodass sich der Rasthaken in der Betriebsstellung des Wischblatts nicht mehr lösen kann. Die Dimensionierung des Langlochs, des Anschlusselements und des Verbindungselements ist so gewählt, dass die Lagerwalze mit einem ausreichenden Spiel im Lagerbett des Anschlusselements gelagert ist.

Zweckmäßigerweise besitzt das Anschlusselement zwei Seitenwände, die durch eine vordere Stirnwand und einen Boden miteinander verbunden sind, wobei an der Innenseite der Stirnwand das Lagerbett angeformt ist. Dadurch ist das Lagerbett von vier Seiten geschützt. Die obere Seite wird in vorteilhafter Weise durch eine Deckwand des Verbindungselements geschlossen, die in montiertem Zustand des Wischblatts etwa bündig mit der Oberkante des Wischarms und des Anschlusselements abschließt. Die sechste Seite, die Stirnseite des Anschlusselements, die zum antriebsseitigen Ende weist, wird vom Wischarm und vom Verbindungselement abgedeckt, wobei der Wischarm zweckmäßigerweise nach dem Overlockprinzip oberhalb des Wischblatts verläuft und im Bereich der hinteren Stirnseite des Anschlusselements eine s-förmige Doppelbiegung mit einer Schrägen aufweist, die geneigt zum antriebsseitigen Ende des Wischblatts läuft. Die Neigung der Schrägen wird an den jeweiligen Einsatzfall angepasst. Es ist zweckmäßig, die Stirnseite des Verbindungselements in einem gleichen Winkel abzuschrägen, sodass zwischen dem Wischarm und den Seitenwänden des Anschlusselements nur ein kleiner Spalt offen bleibt. Dadurch ergibt sich insgesamt in der Betriebsstellung ein kompaktes geschlossenes Design.

### Kurze Beschreibung der Zeichnungen

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Teilansicht eines montierten Wischblatts an einem Wischarm,
- Fig. 2: eine perspektivische Teilansicht eines Wischblatts während der Montage an einen Wischarm,
- Fig. 3: eine perspektivische Ansicht eines Wischblatts mit einem Anschlusselement schräg von oben,
- Fig. 4: einen Längsschnitt durch eine erfindungsgemäße Vorrichtung bei einem abgeklappten Wischarm,
- Fig. 5: einen Längsschnitt durch eine erfindungsgemäße Vorrichtung mit einem Wischarm in Betriebsposition,
- Fig. 6: eine perspektivische Teilansicht eines Tragelements mit einem Anschlusselement von unten,

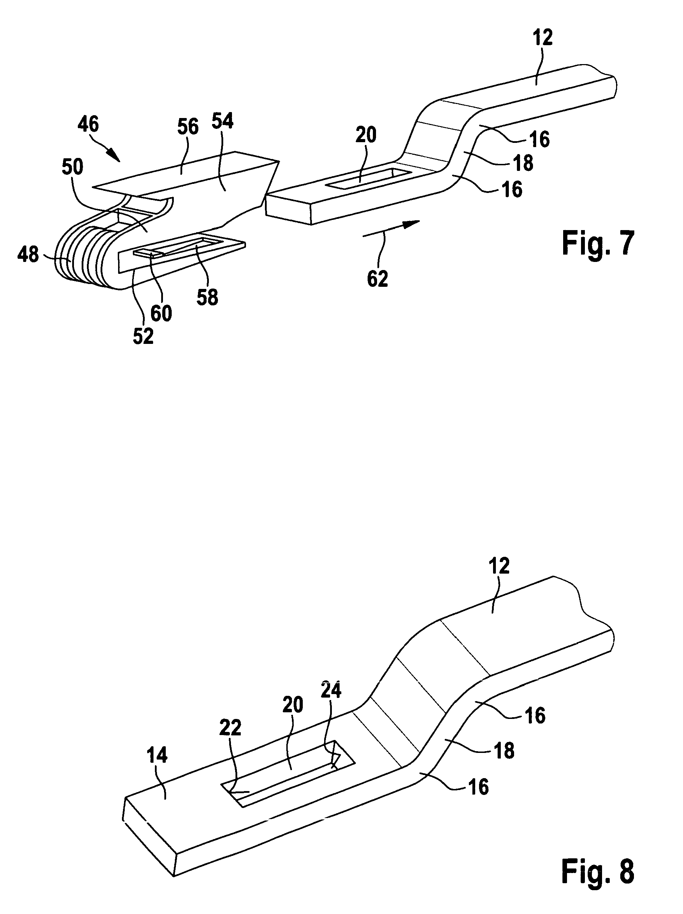

- Fig. 7: eine perspektivische Teilansicht eines Verbindungselements während der Montage an einen Wischarm und
- Fig. 8: eine perspektivische Teilansicht eines Endes eines Wischarms.

### Ausführungsformen der Erfindung

Ein Wischblatt 26 mit einer Wischleiste 30 und einem Spoiler 28 ist durch eine Vorrichtung 10 gelenkig mit einem Wischarm 12 verbunden. Die Vorrichtung 10 besteht aus einem Anschlusselement 32, das aus Kunststoff gefertigt ist und an mehreren Befestigungsstellen 74 durch Ultraschallschweißen, Taumeln, Klippsen, Kleben, Nieten oder dgl. an einem Tragelement 70 des Wischblatts 26 befestigt ist, und aus einem Verbindungselement 46, das ebenfalls aus Kunststoff gefertigt ist und an dem Wischarm 12 befestigt ist.

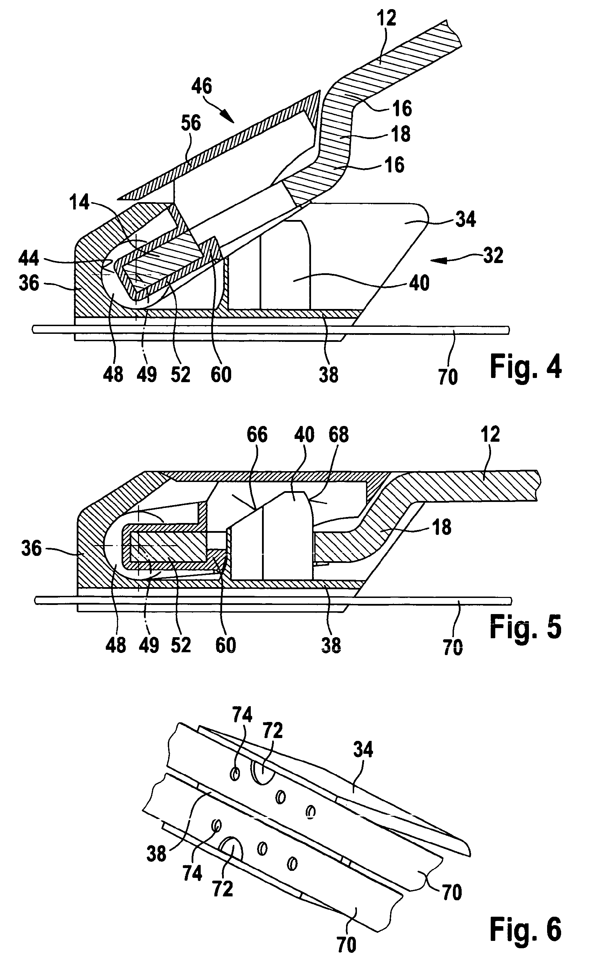

Das Anschlusselement 32, das durch zwei seitliche Zentriernocken 72 in zwei entsprechenden Ausnehmungen des Tragelements 70 in Längsrichtung fixiert ist, besitzt zwei Seitenwände 34, die durch einen Boden 38 und eine Stirnwand 36 miteinander verbunden sind. Die Stirnwand 36 weist in Richtung des freien Endes des Wischblatts 26, während die entgegengesetzte Stirnseite offen ist. Zwischen den Seitenwänden 34 ist an der Stirnwand 36 ein Lagerbett 44 angeformt. Es dient zur Lagerung einer Lagerwalze 48, die den vorderen Teil des Verbindungselements 46 darstellt und einen oberen Schenkel 50 und einen unteren Schenkel 52 miteinander verbindet. Der Zwischenraum zwischen dem oberen Schenkel 50 und dem unteren Schenkel 52 dient zur Aufnahme des freien Endes 14 des Wischarms 12. Dieses schließt sich über eine s-förmige Doppelbiegung 16 mit einer Schrägen 18 an den übrigen Teil des Wischarms 12 an, sodass das freie Ende 14 im montierten Zustand (Fig. 5) näher an dem Wischblatt 26 liegt als der übrige Teil des Wischarms 12. Im montierten Zustand bilden das Lagerbett 44 und die Lagerwalze 48 ein Gelenk mit einer Gelenkachse 49.

Zur Montage wird das Verbindungselement 46 in Montagerichtung 62 auf das freie Ende 14 geschoben, wobei die Schenkel 50 und 52 das im Querschnitt rechteckige Ende 14 des Wischarms 12 umfassen. In der Montageendposition des Verbindungselements 46 liegt die Stirnseite des Endes 14 an der inneren Begrenzung des Zwischenraums zwischen den beiden Schenkeln 50, 52 an, und ein Rasthaken 60 an der Innenseite des unteren Schenkels 52 rastet in ein Langloch 20, das sich in Längsrichtung des Wischarms 12 erstreckt. Somit ist das Verbindungselement 46 in Längsrichtung an der Stirnseite des freien Endes 14 und an der vorderen Stirnseite 22 des Langlochs fixiert, an dem der Rasthaken 60 anliegt. Der Rasthaken 60 füllt nur einen kleinen Teil des Langlochs 20 aus. Im Bereich des darüber hinausgehenden Langlochs 20 besitzt der untere Schenkel 52 ebenfalls ein Langloch 58, das sich mit dem Langloch 20 in diesem Bereich deckt.

An den oberen Schenkel 50 schließen sich Seitenwände 54 an, die durch eine Deckwand 56 miteinander verbunden sind. Die Seitenwände 54 sind an ihren Stirnseiten entsprechend der Schräge 18 am Wischarm 12 abgeschrägt, sodass sich im montierten Zustand zwischen dem Wischarm 12 und den Seitenwänden 54 nur ein geringer Spalt ergibt, und sich die Deckwand 56 annähernd bündig an dem zum Antrieb führenden Teil des Wischarms 12 anschließt. Somit füllt die Deckwand 56 die Öffnung zwischen den Seitenwänden 34, der Stirnwand 36 und der oberen Begrenzung des Wischarms 12 bündig aus.

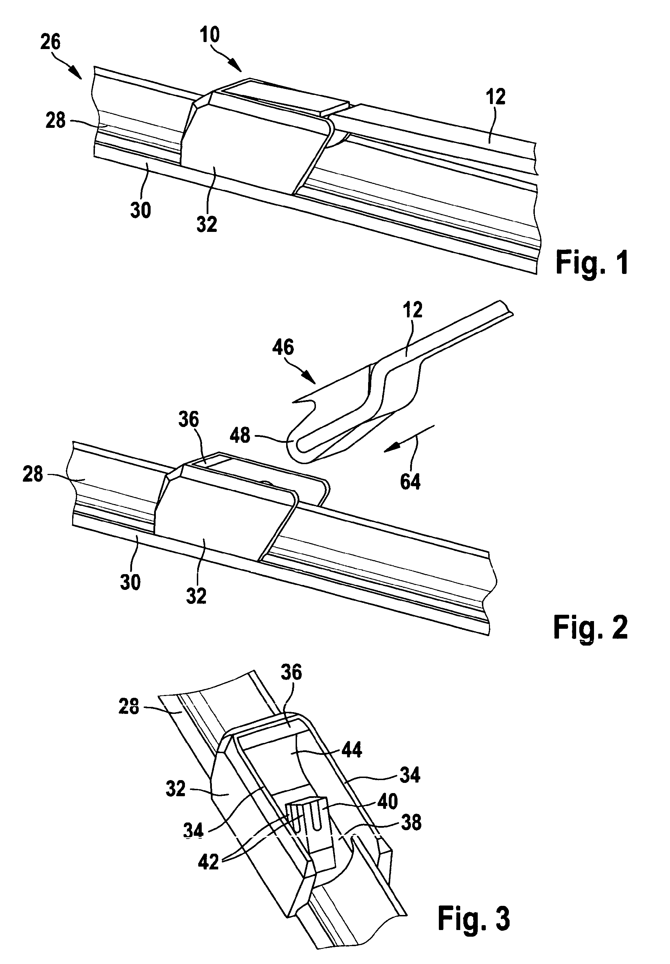

Das vormontierte Verbindungselement 46 wird unter einem Montagewinkel von ca. 30° bis 45° in Montagerichtung 64 in das Anschlusselement 32 eingesetzt, wobei die Lagerwalze 48 in das Lagerbett 44 gleitet. Wird nun das Wischblatt 26 in seine Betriebsposition (Fig. 1 oder 5) etwa parallel zum Wischarm 12 geschwenkt, greift ein Verriegelungsblock 40 in den noch freien Teil des Langlochs 20 am Ende 14 des Wischarms 12 ein und füllt dieses im Wesentlichen bis zur hinteren Stirnseite 24 aus. Um eine möglichst spielfreie Führung des Wischblatts 26 zu gewährleisten, weist der Verriegelungsblock 40 seitliche Rippen 42 auf. Somit wird das Wischblatt 26 zum einen an den Verriegelungsblock 40 und zum anderen an den Seitenwänden 34 des Anschlusselements 32 und an den Seitenwänden 54 des Verbindungselements 46 geführt. Der Verriegelungsblock 40 verhindert ferner, dass sich der Rasthaken 60 während des Betriebs unbeabsichtigt löst. Um genügend Freiraum für die Montage vorzusehen und um die Montage selbst zu erleichtern, besitzt der Verriegelungsblock 40 an seiner oberen Seite zwei Schrägen 66, 68, die in Längsrichtung des Wischblatts 26 geneigt sind, wobei die vordere Schräge 66 zum Wischblatt 26 einen geringeren Neigungswinkel hat als die hintere Schräge 68 (Fig. 5).

## Patentansprüche

1. Vorrichtung (10) zum gelenkigen Verbinden eines Wischblatts (26) mit einem Wischarm (12), wobei ein mit dem Wischblatt (26) zu verbindendes Anschlusselement (32) ein Lagerbett (44) aufweist, das mit einer Lagerwalze (48) an einem mit dem Wischarm (12) zu verbindenden Verbindungselement (46) ein Gelenk mit einer Gelenkachse (49) bildet, und wobei das Verbindungselement (46) mit einem Rasthaken (60) in einem Langloch (20) verrastet, das sich am Ende des Wischarms (12) in dessen Längsrichtung erstreckt und in dem im montierten Zustand ein Verriegelungsblock (40) des Anschlusselements (32) geführt ist, **dadurch gekennzeichnet, dass** das Verbindungselement (46) zwischen einem oberen Schenkel (50) und einem unteren Schenkel (52), die durch die Lagerwalze (48) miteinander verbunden sind, einen Aufnahmeraum für das Ende (14) des Wischarms (12) besitzt und dass an der Innenseite des unteren Schenkels (52) der Rasthaken (60) angeordnet ist, der im montierten Zustand in das Langloch (20) einrastet und an der vorderen Stirnseite (22) des Langlochs (20) anliegt und das Langloch (20) ein Stück weist ausfüllt, während der Verriegelungsblock (40) durch ein Langloch (58) des unteren Schenkels (52) in das Langloch (20) des Wischarms (12) greift und den Rest des Langlochs (20) des Wischarms (12) ausfüllt.

2. Vorrichtung (10) nach Anspruch 1, **dadurch gekennzeichnet, dass** das Anschlusselement (32) zwei Seitenwände (34) besitzt, die durch eine vordere Stirnwand (36) und einen Boden (38) miteinander verbunden sind, wobei an der Innenseite der Stirnwand (36) das Lagerbett (44) angeformt ist.

3. Vorrichtung (10) nach Anspruch 2, **dadurch gekennzeichnet, dass** zwischen den Seitenwänden (34) des Anschlusselements (32) der Verriegelungsblock (40) am Boden (38) angeformt ist und von dem Lagerbett (44) einen solchen Abstand aufweist, dass sich im montierten Zustand zwischen dem Lagerbett (44) und der Lagerwalze (48) des Verbindungselements (46) ein ausreichendes Gelenksspiel ergibt.

4. Vorrichtung (10) nach Anspruch 2 oder 3, **dadurch gekennzeichnet, dass** der Verriegelungsblock (40) seitliche Rippen (42) besitzt.

5. Vorrichtung (10) nach einem der Ansprüche 3 bis 4, **dadurch gekennzeichnet, dass** der Verriegelungsblock (40) an seiner oberen Seite in Längsrichtung in beiden Richtungen abgeschrägt ist, wobei die vordere Schräge (66) eine geringere Neigung zum Wischblatt (26) besitzt als die hintere Schräge (68).

6. Vorrichtung (10) nach einem der vorhergehenden Ansprüche, **dadurch gekennzeichnet, dass** das Verbindungselement (46) Seitenwände (54) besitzt, die zwischen die Seitenwände (34) des Anschlusselements (32) geführt sind und durch eine Deckwand (56) miteinander verbunden sind, wobei die Deckwand (56) im montierten Zustand des Wischblatts (26) etwa bündig mit der Oberkante des Wischarms (12) und des Anschlusselements (32) abschließt.

7. Vorrichtung (10) nach Anspruch 6, **dadurch gekennzeichnet, dass** die zum Wischarm (12) weisende Stirnseite des Verbindungselements (46) in einem Winkel abgeschrägt ist, der einer Schrägen (18) eine Doppelbiegung (16) des Wischarms (12) um eine Achse parallel zur Gelenkachse (49) angepasst ist.

8. Vorrichtung (10) nach einem der vorliegenden Ansprüche, **dadurch gekennzeichnet, dass** Anschlusselement (32) aus Kunststoff gefertigt ist und an mehreren Befestigungsstellen (74) durch Ultraschallschweißen, Taumeln, Klippsen, Kleben Nieten oder dgl. an einem Tragelement (70) befestigt werden kann.

9. Wischblatt (26) umfassend eine Vorrichtung (10) nach einem der vorhergehenden Ansprüche.

## Claims

1. Device (10) for the articulated connection of a wiper blade (26) to a wiper arm (12), wherein a joining element (32) which is to be connected to the wiper blade (26) has a bearing bed (44) which, together with a bearing roller (48) on a connecting element (46) which is to be connected to the wiper arm (12), forms a joint with an axis of articulation (49), and wherein the connecting element (46) latches by means of a latching hook (60) in an elongated hole (20) which extends at the end of the wiper arm (12) in the longitudinal direction thereof and in which, in the fitted state, a locking block (40) of the joining element (32) is guided, **characterized in that** the connecting element (46) has, between an upper limb (50) and a lower limb (52), which are connected to each other by the bearing roller (48), a receiving space for the end (14) of the wiper arm (12), and **in that** the latching hook (60) is arranged on the inside of the lower limb (52), said latching hook, in the fitted state, latching into the elongated hole (20) and bearing against the front end side (22) of the elongated hole (20) and filling a section of the elongated hole (20) while the locking block (40) reaches through an elongated hole (58) in the lower limb (52) into the elongated hole (20) in the wiper arm (12) and fills the rest of the elongated hole (20) in the wiper arm (12).

2. Device (10) according to Claim 1, **characterized in that** the joining element (32) has two side walls (34) which are connected to each other by a front end wall (36) and a base (38), wherein the bearing bed (44) is integrally formed on the inside of the end wall (36).

3. Device (10) according to Claim 2, **characterized in that** the locking block (40) is integrally formed on the base (38) between the side walls (34) of the joining element (32) and is at such a distance from the bearing bed (44) that there is a sufficient joint clearance in the fitted state between the bearing bed (44) and the bearing roller (48) of the connecting element (46).

4. Device (10) according to Claim 2 or 3, **characterized in that** the locking block (40) has lateral ribs (42).

5. Device (10) according to either of Claims 3 and 4, **characterized in that** the upper side of the locking block (40) is bevelled in the longitudinal direction in both directions, wherein the front bevel (66) has a smaller inclination with respect to the wiper blade (26) than the rear bevel (68).

6. Device (10) according to one of the preceding claims, **characterized in that** the connecting element (46) has side walls (54) which are guided between the side walls (34) of the joining element (32) and are connected to one another by a top wall (56), wherein the top wall (56) ends approximately flush with the upper edge of the wiper arm (12) and of the joining element (32) in the fitted state of the wiper blade (26).

7. Device (10) according to Claim 6, **characterized in that** that end side of the connecting element (46) which faces the wiper arm (12) is bevelled at an angle which is matched to a bevel (18) of a double bend (16) in the wiper arm (12) about an axis parallel to the axis of articulation (49).

8. Device (10) according to one of the preceding claims, **characterized in that** the joining element (32) is manufactured from plastic and can be fastened to a supporting element (70) at a plurality of fastening points (74) by ultrasonic welding, tumbling, clipping, adhesive bonding, riveting or the like.

9. Wiper blade (26) comprising a device (10) according to one of the preceding claims.

## Revendications

1. Dispositif (10) pour la liaison articulée d'un balai d'essuie-glace (26) à un bras d'essuie-glace (12), un élément de raccordement (32) qui doit être relié au balai d'essuie-glace (26) comprenant un support de palier (44) qui, conjointement avec un cylindre de palier (48) sur un élément de liaison (46) devant être relié au bras d'essuie-glace (12), forme une articulation dotée d'un axe d'articulation (49), et l'élément de liaison (46) s'encliquetant, à l'aide d'un crochet d'encliquetage (60), dans un trou oblong (20) qui s'étend à l'extrémité du bras d'essuie-glace (12) dans sa direction longitudinale et dans lequel est guidé un bloc de verrouillage (40) de l'élément de raccordement (32) dans l'état monté, **caractérisé en ce que** l'élément de liaison (46) possède, entre une branche supérieure (50) et une branche inférieure (52) qui sont reliées l'une à l'autre par le cylindre de palier (48), un espace de réception pour l'extrémité (14) du bras d'essuie-glace (12), et **en ce que** le crochet d'encliquetage (60) est disposé sur le côté intérieur de la branche inférieure (52), lequel crochet d'encliquetage s'encliquète dans le trou oblong (20) dans l'état monté, s'applique contre le côté frontal avant (22) du trou oblong (20) et remplit quelque peu le trou oblong (20), tandis que le bloc de verrouillage (40) s'engage à travers un trou oblong (58) de la branche inférieure (52) dans le trou oblong (20) du bras d'essuie-glace (12) et remplit le reste du trou oblong (20) du bras d'essuie-glace (12).

2. Dispositif (10) selon la revendication 1, **caractérisé en ce que** l'élément de raccordement (32) possède deux parois latérales (34) qui sont reliées l'une à l'autre par une paroi frontale avant (36) et un fond (38), le support de palier (44) étant formé sur le côté intérieur de la paroi frontale (36).

3. Dispositif (10) selon la revendication 2, **caractérisé en ce que** le bloc de verrouillage (40) est formé sur le fond (38) entre les parois latérales (34) de l'élément de raccordement (32) et est situé à une distance du support de palier (44) telle qu'il en résulte dans l'état monté un jeu d'articulation suffisant entre le support de palier (44) et le cylindre de palier (48) de l'élément de liaison (46).

4. Dispositif (10) selon la revendication 2 ou 3, **caractérisé en ce que** le bloc de verrouillage (40) possède des nervures latérales (42).

5. Dispositif (10) selon la revendication 3 ou 4, **caractérisé en ce que** le bloc de verrouillage (40) est incliné dans les deux sens dans la direction longitudinale au niveau de son côté supérieur, la pente avant (66) possédant une inclinaison par rapport au balai d'essuie-glace (26) qui est plus faible que celle de la pente arrière (68).

6. Dispositif (10) selon l'une quelconque des revendications précédentes, **caractérisé en ce que** l'élément de liaison (46) possède des parois latérales (54) qui sont guidées entre les parois latérales (34) de l'élément de raccordement (32) et qui sont reliées l'une à l'autre par une paroi de recouvrement (56), la paroi de recouvrement (56) se terminant, dans l'état monté du balai d'essuie-glace (26), approximativement en affleurement avec le bord supérieur du bras d'essuie-glace (12) et de l'élément de raccordement (32).

7. Dispositif (10) selon la revendication 6, **caractérisé en ce que** le côté frontal de l'élément de liaison (46) qui est orienté vers le bras d'essuie-glace (12) est incliné suivant un angle qui est adapté à une pente (18) d'une courbure double (16) du bras d'essuie-glace (12) autour d'un axe parallèlement à l'axe d'articulation (49).

8. Dispositif (10) selon l'une quelconque des revendications précédentes, **caractérisé en ce que** l'élément de raccordement (32) est fabriqué en plastique et peut être fixé à un élément de support (70) en plusieurs points de fixation (74) par soudage aux ultrasons, par nutation, par clipsage, par collage, par rivetage ou similaire.

9. Balai d'essuie-glace (26) comportant un dispositif (10) selon l'une quelconque des revendications précédentes.
